(19) Europäisches Patentamt
European Patent Office
Office européen des brevets

(11) **EP 3 776 522 B1**

(12) **FASCICULE DE BREVET EUROPEEN**

(45) Date de publication et mention
de la délivrance du brevet:
**31.05.2023 Bulletin 2023/22**

(21) Numéro de dépôt: **19715928.8**

(22) Date de dépôt: **09.04.2019**

(51) Classification Internationale des Brevets (IPC):
**G09G 3/20** *(2006.01)*    **G09G 5/02** *(2006.01)*
**H04N 9/43** *(2006.01)*

(52) Classification Coopérative des Brevets (CPC):
**G09G 3/20;** G09G 2340/08; G09G 2340/14;
G09G 2370/00

(86) Numéro de dépôt international:
**PCT/EP2019/058908**

(87) Numéro de publication internationale:
**WO 2019/197379 (17.10.2019 Gazette 2019/42)**

(54) **PROCÉDÉ DE TRANSMISSION D'UNE IMAGE NUMÉRIQUE MONOCHROME VIA UNE INTERFACE DE TRANSMISSION COMPORTANT UNE PLURALITÉ DE CANAUX DE TRANSMISSION**

VERFAHREN ZUR ÜBERTRAGUNG EINES MONOCHROMEN DIGITALEN BILDES ÜBER EINE ÜBERTRAGUNGSSCHNITTSTELLE MIT MEHREREN ÜBERTRAGUNGSKANÄLEN

METHOD FOR TRANSMITTING A MONOCHROME DIGITAL IMAGE VIA A TRANSMISSION INTERFACE COMPRISING A PLURALITY OF TRANSMISSION CHANNELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.04.2018 FR 1853066**

(43) Date de publication de la demande:
**17.02.2021 Bulletin 2021/07**

(73) Titulaire: **Commissariat à l'Energie Atomique et aux Energies Alternatives
75015 Paris (FR)**

(72) Inventeur: **SARRASIN, Denis
38054 GRENOBLE CEDEX 09 (FR)**

(74) Mandataire: **Cabinet Camus Lebkiri
25 rue de Maubeuge
75009 Paris (FR)**

(56) Documents cités:
**US-A1- 2003 071 775    US-A1- 2006 023 967
US-A1- 2010 109 992**

• **S. L. WRIGHT ET AL: "25.4: Color and Luminance Management for High-Resolution Liquid-Crystal Displays", S I D INTERNATIONAL SYMPOSIUM. DIGEST OF TECHNICAL PAPERS, vol. 34, no. 1, 1 janvier 2003 (2003-01-01), page 940, XP055533395, US ISSN: 0097-966X, DOI: 10.1889/1.1832439**

**Description**

**DOMAINE TECHNIQUE DE L'INVENTION**

La présente invention concerne un procédé de transmission d'une image numérique monochrome via une interface de transmission comportant une pluralité de canaux de transmission.

**ARRIÈRE-PLAN TECHNOLOGIQUE DE L'INVENTION**

Une image numérique est constituée par une multitude de pixels agencés sous la forme d'une matrice. De manière classique, chaque pixel est codé sur trois composantes qui correspondent chacune à une couleur primaire, généralement le rouge, le vert et le bleu. On parle dans ce cas de codage RVB (ou « RGB » selon la terminologie anglo-saxonne).

L'image numérique est transmise depuis une source d'images numériques vers un écran au moyen d'une interface comprenant trois canaux de transmission, chaque canal de transmission étant dédié à l'une des composantes de couleur. Les trois informations de couleurs de chaque pixel peuvent ainsi être transmises en parallèle.

Une fois reçue par l'écran, l'image numérique en couleurs peut être transformée en une image monochrome. Pour ce faire, un niveau d'intensité lumineuse E'y est calculée pour chaque pixel à partir des trois composantes R, G et B selon l'équation suivante :

$$E'y = 0{,}299 \times R + 0{,}587 \times G + 0{,}114 \times B$$

Toutefois, il n'existe pas à ce jour de méthode pour transmettre directement à un écran monochrome une image numérique monochrome provenant d'une source d'images numériques. Il existe donc un besoin pour une telle méthode.

US 2003/071775 divulgue un écran affichant une image monochrome en représentant chaque pixel par un groupe de trois sous-pixel avec différentes luminances.

**RÉSUMÉ DE L'INVENTION**

La présente invention vise à répondre à ce besoin en proposant un procédé de transmission d'une image numérique monochrome provenant d'une source d'images numériques reliée à un écran monochrome au moyen d'une interface de transmission comportant une pluralité de canaux de transmission, l'image monochrome comportant une pluralité de pixels d'image, l'écran monochrome comportant une pluralité de pixels d'affichage, le procédé comportant les étapes suivantes :

- répartir les pixels d'image en une pluralité de groupes de pixels, groupe de pixels comprenant un nombre de pixel d'image égal au nombre de canaux de transmission;
- transmettre successivement les groupes de pixels depuis la source d'images numériques vers l'écran monochrome via l'interface de transmission, les pixels d'image de chaque groupe de pixels étant transmis en parallèle via les canaux de transmission ;
- attribuer chaque pixel d'image reçu par l'écran monochrome à un pixel d'affichage correspondant de manière à reconstituer l'image numérique sur l'écran monochrome.

Le procédé selon l'invention peut également comporter une ou plusieurs caractéristiques parmi les suivantes considérées individuellement ou selon toutes les combinaisons techniquement possibles.

Selon un mode de mise en oeuvre, l'interface de transmission comporte trois canaux de transmission, chaque groupe de pixels comportant trois pixels d'image.

Selon un mode de mise en oeuvre, les pixels d'affichage de l'écran monochrome forment une matrice d'affichage, les pixels d'affichage étant agencés de manière à former des ensembles de trois pixels appelés « triplets », chaque triplet étant une sous-matrice de dimensions (1,3) de la matrice d'affichage, les triplets formant une matrice secondaire de dimensions (M,N), les pixels d'image étant répartis de manière à ce que chaque groupe de pixels soit attribué directement à un triplet correspondant.

Selon un mode de mise en oeuvre, chaque groupe de pixels est identifié par un numéro d'identification Nb défini par l'équation suivante :

$$Nb = N.(i-1) + j$$

où i et j sont des nombres entiers variant respectivement de 1 à M et de 1 à N, les groupes de pixels étant transmis par ordre croissant des numéros d'identification.

Selon un mode de mise en oeuvre, les pixels d'affichage ayant une position identique dans chaque triplet sont associés à un même canal de transmission.

Selon un mode de mise en oeuvre, les pixels d'affichage de l'écran monochrome forment une matrice d'affichage, les pixels d'affichage étant agencés de manière à former des ensembles de quatre pixels appelés « quadruplets », chaque quadruplet étant une sous-matrice carrée de dimension 2 de la matrice d'affichage, les quadruplets formant une matrice secondaire de dimensions (M',N'), les pixels d'image étant répartis de manière à former des motifs de répétition comprenant chacun quatre groupes de pixels, les pixels d'image de chaque motif de répétition étant attribués aux pixels d'affichage de trois quadruplets consécutifs appartenant à la même ligne de la matrice secondaire.

Selon un mode de mise en oeuvre, chaque motif de répétition est identifié par un numéro d'identification Nb' défini par l'équation suivante :

$$Nb' = N'.(k - 1) + l'$$

où k et l' sont des nombres entiers variant respectivement de 1 à M' et de 1 à N'/3, le motif de répétition MR(k,l') comportant un premier groupe de pixels $G1_{Nb'}$, un deuxième groupe de pixels $G2_{Nb'}$, un troisième groupe de pixels $G3_{Nb'}$ et un quatrième groupe de pixels $G4_{Nb'}$ tels que :

$$G1_{Nb'} \ni \{PI(2k - 1, 2l - 1); PI(2k - 1, 2l); PI(2k, 2l - 1)\} ;$$

$$G2_{Nb'} \ni \{PI(2k, 2l); PI(2k - 1, 2(l + 1) - 1); PI(2k, 2(l + 1) - 1)\} ;$$

$$G3_{Nb'} \ni \{PI(2k - 1, 2(l + 1)); PI(2k, 2(l + 1)); PI(2k - 1, 2(l + 2) - 1)\} ;$$

$$G4_{Nb'} \ni \{PI(2k, 2(l + 2) - 1); PI(2k - 1, 2(l + 2)); PI(2k, 2(l + 2))\} ;$$

où 1 = 3l'- 2.

Selon un mode de mise en oeuvre, les motifs de répétition sont transmis par ordre croissant des numéros d'identification.

Selon un mode de mise en oeuvre, trois des quatre pixels d'affichage de chaque quadruplet sont chacun associés à un canal de transmission, les pixels d'affichage associés au même canal de transmission ayant une position identique dans chaque quadruplet.

## BRÈVE DESCRIPTION DES FIGURES

L'invention et ses différentes applications seront mieux comprises à la lecture de la description qui suit et à l'examen des figures qui l'accompagnent, parmi lesquelles :

- la figure 1 est un diagramme fonctionnel d'un mode de mise en oeuvre du procédé selon l'invention ;
- la figure 2 illustre un premier exemple de mise en oeuvre du procédé selon l'invention ;
- la figure 3 illustre un deuxième exemple de mise en oeuvre du procédé selon l'invention.

Les figures ne sont présentées qu'à titre indicatif et nullement limitatif de l'invention.

Pour plus de clarté, les éléments identiques ou similaires sont repérés par des signes de référence identiques sur toutes les figures.

## DESCRIPTION DÉTAILLÉE DE MODES DE MISE EN ŒUVRE DE L'INVENTION

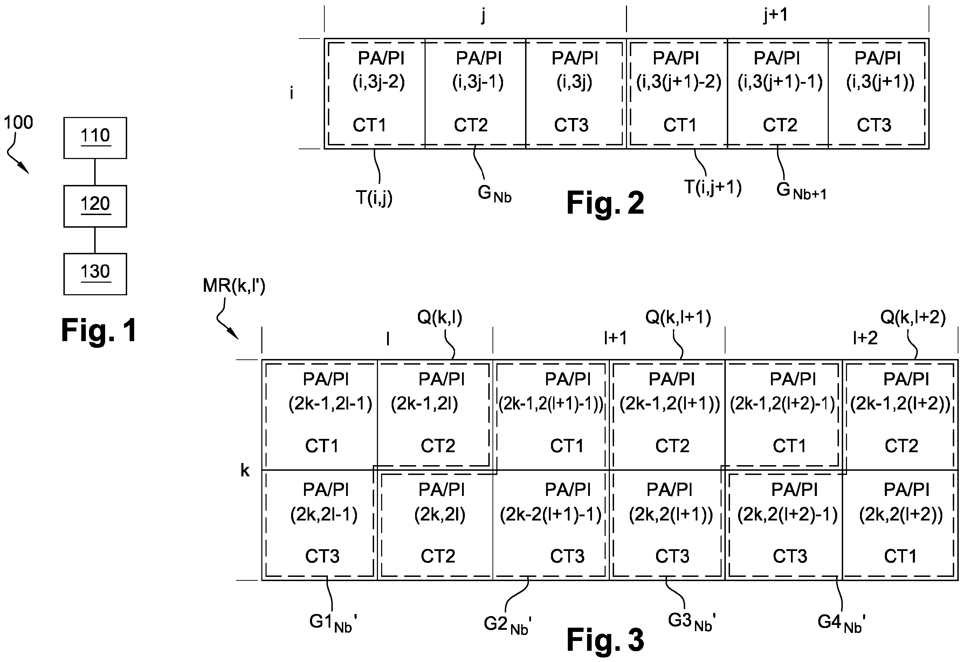

La figure 1 montre un procédé de transmission 100 d'une image numérique monochrome, selon un mode de mise en oeuvre de l'invention. L'image numérique monochrome comporte des pixels d'image agencés sous la forme d'une matrice image de dimensions (X,Y), c'est-à-dire comprenant X lignes et Y colonnes, X et Y étant des nombres entiers strictement positifs. L'image numérique monochrome présente une définition XY égale au nombre de pixels d'image qu'elle comporte, c'est-à-dire au produit du nombre X de lignes par le nombre Y de colonnes de la matrice image. L'image numérique étant monochrome, chaque pixel d'image est codé sur une seule composante correspondant à un niveau d'intensité lumineuse.

L'image numérique monochrome provient d'une source d'images numériques telle qu'un ordinateur, un appareil photo numérique ou un lecteur multimédia. La source d'images est connectée à un écran monochrome par l'intermédiaire d'une interface de transmission comportant plusieurs canaux de transmission. L'interface de transmission utilisée est une interface existante prévue pour transmettre des images numériques en couleurs. Les pixels d'une image numérique en couleurs sont codés sur plusieurs composantes qui définissent un espace colorimétrique. Classiquement, cet espace colorimétrique est défini par trois couleurs primaires telles que le rouge, le vert et le bleu (RGB). De préférence, l'interface de transmission comporte donc un premier canal de transmission CT1, un deuxième canal de transmission CT2 et un troisième canal de transmission CT3. Dans une telle interface, lorsque l'on travaille avec des images numériques en couleurs, chaque canal de transmission est dédié à la transmission de l'une des composantes de couleur. L'interface de transmission est par exemple de type VGA (« Vidéo Graphics Array »), DVI (« Digital Visual Interface), HDMI (« High-Definition Multimedia interface ») ou DisplayPort.

L'écran monochrome comporte un circuit électronique comprenant une matrice d'affichage constituée de pixels d'affichage et des moyens d'adressages des pixels d'affichage. Les pixels d'affichage sont des éléments matériels configurés pour émettre de la lumière en fonction du niveau d'intensité lumineuse codé dans les pixels d'image. Les moyens d'adressage permettent d'accéder aux pixels d'affichage pour leur fournir les pixels d'image reçus via les canaux de transmission.

Dans le contexte de l'invention, le circuit d'affichage de l'écran monochrome est avantageusement similaire à celui d'un écran en couleurs dans lequel chaque pixel d'affichage comporte plusieurs sous-pixels dont au moins un sous-pixel pour chaque composante de couleur. Ces sous-pixels sont généralement réalisés au moyen d'une valve LCD placée devant une source de lumière blanche, au moyen de diodes électroluminescentes émettant dans les longueurs d'ondes du rouge, du vert ou du bleu, ou au moyen de diodes électroluminescentes émettant une lumière blanche au-dessus desquelles sont disposés des filtres de couleur afin d'obtenir l'émission des couleurs désirées. Dans ce dernier cas, le circuit d'affichage de l'écran monochrome peut donc être obtenu en supprimant ces filtres de couleur. Les sous-pixels de l'écran en couleurs deviennent alors des pixels à part entière dans l'écran monochrome et les moyens d'adressage restent inchangés. Un avantage à partir d'un circuit d'affichage existant est qu'il n'est dans ce cas pas nécessaire de développer un circuit d'affichage spécifique pour réaliser l'écran monochrome.

Dans le but de simplifier la description et de faciliter la compréhension, on considère par la suite que la matrice image et la matrice d'affichage présentent des dimensions identiques, c'est-à-dire qu'elles comportent toutes les deux le même nombre X de lignes et le même nombre Y de colonnes. Il est évident que l'homme du métier comprendra que les matrices peuvent avoir des dimensions différentes, la définition de l'image numérique pouvant par exemple être inférieure à celle de l'écran monochrome, et saura alors adapter l'invention en conséquence.

Le procédé de transmission 100 comporte une première étape 110 au cours de laquelle les pixels de l'image numérique monochrome sont répartis en groupes de pixels. Cette première étape 110 consiste à préparer les pixels d'image à être envoyés à l'écran monochrome. Les pixels d'image sont répartis en un nombre de groupes égal au nombre de canaux de transmissions. Il est ainsi possible de transmettre simultanément autant de pixels qu'il y a de canaux de transmission ce qui permet, pour une même fréquence d'horloge, de maximiser le nombre de pixels transmis. En l'occurrence, les groupes de pixels comportent chacun trois pixels d'image. La première étape 110 s'effectue au niveau de la source d'images en programmant de manière appropriée l'envoi des pixels, comme décrit plus en détail dans les exemples de mise en oeuvre qui suivront. La répartition en groupe de pixels se fait donc sur des pixels d'image différents.

Ensuite, au cours d'une deuxième étape 120, les groupes de pixels sont successivement transmis depuis la source d'images numériques vers l'écran monochrome via l'interface de transmission. Les pixels d'image appartenant à un même groupe de pixels sont quant à eux transmis en parallèle via les différents canaux de transmission.

Le procédé de transmission comporte également une troisième étape 130 d'attribution de chaque pixel d'image reçu par l'écran monochrome à un pixel d'affichage correspondant. En d'autres termes, il s'agit de faire correspondre les pixels de l'image numérique avec les pixels de l'écran monochrome de manière à afficher l'image numérique. La troisième étape 130 s'effectue au niveau de l'écran monochrome en commandant de manière appropriée les moyens d'adressage.

Dans le contexte de l'invention, on entend par « attribuer un pixel d'image à un pixel d'affichage » l'opération consistant à fournir au pixel d'affichage l'information codée relative au niveau d'intensité lumineuse contenue dans le pixel de l'image numérique.

Par rapport à la transmission d'une image en couleurs, la quantité de données monochrome transmise grâce à l'invention peut être multipliée jusqu'à un rapport 3 pour une même fréquence d'horloge. Les canaux de transmission étant limités en fréquence, l'invention permet donc de transmettre des images numériques monochromes ayant des définitions plus élevées que celles des images numériques en couleurs qui seraient transmises par les mêmes canaux de transmissions. L'invention est particulièrement intéressante pour des applications privilégiant la définition des images au besoin de couleurs.

En ce sens, la présente invention trouve une application particulièrement intéressante dans le domaine des écrans miniatures, également appelés « microdisplays » selon la terminologie anglo-saxonne, pour lesquels des définitions les plus élevées possibles sont recherchées.

A titre d'exemple, la transmission d'images numériques en couleurs à un écran couleur ayant une définition de 1280x1024 et à une fréquence de 60 Hz s'effectue à une fréquence pixel de 91 MHz selon la norme VESA (« Vidéo Electronics Standards Association » en langue anglo-saxonne). A cette même fréquence, l'invention peut permettre de transmettre une image monochrome ayant une définition de 3840x1024.

Un autre avantage de l'invention est la possibilité de travailler à une fréquence plus basse tout en conservant une même définition d'image, ce qui permet notamment de réduire la consommation d'énergie électrique.

Un premier exemple de mise en oeuvre de l'invention va maintenant être décrit en référence à la figure 2. Dans cet exemple de mise en oeuvre, les pixels d'affichage PA de l'écran monochrome sont agencés de manière à former des triplets T, c'est-à-dire des ensembles de trois pixels d'affichage PA. Dans une version en couleurs d'un tel écran monochrome, chaque pixel d'affichage PA d'un triplet T serait par exemple destiné à afficher l'une des trois composantes de couleurs d'un pixel d'une image numérique en couleurs.

Les triplets T forment une matrice secondaire de dimensions (M,N), M et N étant des nombres entiers strictement positifs. Chaque triplet T peut être identifié par un indice de ligne i et un indice de colonne j, i et j étant des nombres entiers respectivement compris entre 1 et M ($i \in [1 ; M]$) et entre 1 et N ($j \in [1 ; N]$). Chaque triplet T est par exemple constitué de trois pixels d'affichage PA consécutifs appartenant à la même ligne de la matrice d'affichage. Autrement dit, chaque triplet T est une sous-matrice de dimensions (1,3) de la matrice d'affichage. La matrice secondaire comporte donc le même nombre de lignes que la matrice d'affichage (M = X) et un nombre de colonnes égal au tiers du nombre de colonnes de la matrice d'affichage (N = Y/3). Par exemple, chaque triplet T(i,j) comporte un premier pixel d'affichage PA(i, 3j - 2), un deuxième pixel d'affichage PA(i, 3j - 1) et un troisième pixel d'affichage PA(i, 3j).

Les triplets T comportent le même nombre de pixels que les groupes de pixels transmis via les canaux de transmission. Chaque groupe de pixels est donc avantageusement formé de manière à pouvoir être attribué directement au triplet T correspondant. Par conséquent, chaque groupe de pixels comporte les trois pixels PI de l'image numérique ayant les mêmes coordonnées que les trois pixels d'affichage PA du triplet T correspondant. D'un point de vue mathématique, les groupes de pixels $G_{Nb}$ et les pixels d'image PI qu'ils contiennent respectent la relation suivante :

$$G_{Nb} \ni \{PI(i, 3j - 2); PI(i, 3j - 1); PI(i, 3j)\}$$

où Nb est un numéro d'identification de chaque groupe G, Nb étant défini par l'équation suivante :

$$Nb = N.(i - 1) + j$$

pour j variant de 1 à N et i variant de 1 à M.

Les groupes de pixels $G_{Nb}$ sont de préférence transmis par ordre croissant des numéros d'indentification Nb, c'est-à-dire par indice de colonne j croissant de manière à afficher une ligne complète, puis par indice de ligne i croissant.

Avantageusement, les pixels d'affichage PA ayant une position identique dans chaque triplet T sont associés à un même canal de transmission. Autrement dit, tous les pixels d'affichage PA ayant la même position dans les triplets T reçoivent des pixels d'image PI transmis par le même canal de transmission. Ainsi, l'étape 130 d'attribution des pixels d'image est simplifiée. Par exemple, le premier pixel d'affichage PA(i, 3j - 2), le deuxième pixel d'affichage PA(i, 3j - 1) et le troisième pixel d'affichage PA(i, 3j) de chaque triplet T(i, j) sont associés respectivement au premier canal de transmission CT1, au deuxième canal de transmission CT2 et au troisième canal de transmission CT3, comme illustré à la figure 2.

Un deuxième exemple de mise en oeuvre de l'invention va maintenant être décrit en référence à la figure 3. Dans cet exemple de mise en oeuvre, les pixels d'affichage PA de l'écran monochrome sont agencés de manière à former des quadruplets Q, c'est-à-dire des ensembles de quatre pixels. Dans une version en couleurs d'un tel écran monochrome, trois des pixels d'affichage PA d'un quadruplet Q seraient par exemple chacun destinés à afficher une composante de couleur d'un pixel d'une image numérique en couleurs. Le pixel d'affichage PA restant pourrait quant à lui être utilisé pour afficher une deuxième fois par exemple la composante de couleur bleue si elle est moins lumineuse que les autres, ou bien pour émettre de la lumière blanche afin d'augmenter la luminosité du pixel.

Les quadruplets Q forment une matrice secondaire de dimensions (M',N'), M' et N' étant des nombres entiers strictement positifs. Chaque quadruplet Q peut être identifié par un indice de ligne k et un indice de colonne l, k et l étant des nombres entiers respectivement compris entre 1 et M' ($k \in [1 ; M']$) et entre 1 et N' ($1 \in [1 ; N']$). Chaque quadruplet Q est une sous-matrice carrée de dimension 2 de la matrice d'affichage. Par conséquent, le nombre de lignes de la matrice secondaire est égal à la moitié du nombre de lignes que la matrice d'affichage (M' = X/2) et le nombre de colonnes de la matrice secondaire est égal à la moitié du nombre de colonnes de la matrice d'affichage (N' = Y/2). Par exemple, chaque quadruplet Q(k, 1) comporte un premier pixel d'affichage PA(2k - 1, 2l - 1) , un deuxième pixel d'affichage PA(2k - 1, 2l), un troisième pixel d'affichage PA(2k, 2l - 1) et un quatrième pixel d'affichage PA(2k, 2l).

Un quadruplet Q comporte un pixel de plus qu'un groupe de pixels transmis via les canaux de transmission. Un seul groupe de pixels n'est donc pas suffisant pour remplir totalement un quadruplet Q. Par contre, trois quadruplets Q comportent un nombre total de pixels équivalent à celui de quatre groupes de pixels. Les pixels d'image PI sont donc avantageusement répartis de manière à former des motifs de répétition MR comprenant chacun quatre groupes de pixels, chaque motif de répétition MR correspondant à trois quadruplets Q consécutifs appartenant à la même ligne de la matrice secondaire. Dans ce cas, chaque motif de répétition MR peut être identifié par l'indice de ligne k et un indice de colonne l' qui est un nombre entier compris entre 1 et N'/3 (l' ∈ [1; N'/3]). Chaque motif de répétition MR(k, l') comporte donc un premier quadruplet Q(k, l), un deuxième quadruplet Q(k, l + 1) et un troisième quadruplet Q(k, l + 2) où l et l' sont liés par la relation suivante :

$$l = 3l' - 2.$$

Le motif de répétition MR(k, l') comporte par exemple un premier groupe $G1_{Nb'}$, un deuxième groupe $G2_{Nb'}$, un troisième groupe $G3_{Nb'}$ et un quatrième groupe $G4_{Nb'}$ tels que :

$$G1_{Nb'} \ni \{PI(2k - 1, 2l - 1); PI(2k - 1, 2l); PI(2k, 2l - 1)\} ;$$

$$G2_{Nb'} \ni \{PI(2k, 2l); PI(2k - 1, 2(l + 1) - 1); PI(2k, 2(l + 1) - 1)\} ;$$

$$G3_{Nb'} \ni \{PI(2k - 1, 2(l + 1)); PI(2k, 2(l + 1)); PI(2k - 1, 2(l + 2) - 1)\} ;$$

$$G4_{Nb'} \ni \{PI(2k, 2(l + 2) - 1); PI(2k - 1, 2(l + 2)); PI(2k, 2(l + 2))\} ;$$

où Nb' est un numéro d'identification de chaque motif de répétition MR, Nb' étant défini par l'équation suivante :

$$Nb' = N'.(k - 1) + l'$$

pour l' variant de 1 à N'/3 et k variant de 1 à M'.

Les quatre groupes de pixels formant le motif de répétition MR sont de préférence transmis dans l'ordre, c'est-à-dire du premier au quatrième. De même, les motifs de répétition MR sont de préférence transmis par ordre de numéro Nb' croissant de manière à afficher les lignes de l'image deux par deux. Il est à noter que dans cette exemple de mise en oeuvre, l'écran monochrome est avantageusement équipé d'une mémoire de ligne permettant de stocker les pixels d'image PI reçus jusqu'à la transmission complète de deux lignes consécutives de l'image numérique.

Avantageusement, trois des quatre pixels d'affichage PA de chaque quadruplet Q sont chacun associés à un canal de transmission CT1, CT2, CT3, les pixels d'affichage PA associés au même canal de transmission CT1, CT2, CT3 ayant une position identique dans chaque quadruplet Q. Autrement dit, trois des quatre pixels d'affichage PA de chaque quadruplet Q reçoivent des pixels d'image PI transmis par leur canal de transmission respectif, qui est toujours le même. Ainsi, l'étape d'attribution des pixels de l'image numérique est simplifiée. Par contre, le pixel d'affichage PA restant reçoit un pixel d'image PI via un canal de transmission qui varie en fonction des coordonnées du quadruplet Q.

Par exemple, le premier pixel d'affichage PA(2k - 1, 2l - 1) , le deuxième pixel d'affichage PA(2k - 1, 2l) et le troisième pixel d'affichage PA(2k, 2l - 1) de chaque quadruplet Q(k, l) sont associés respectivement au premier canal de transmission CT1, au deuxième canal de transmission CT2 et au troisième canal de transmission CT3. Dans ce cas, c'est le quatrième pixel d'affichage PA(2k, 2l) qui reçoit son pixel d'image PI via un canal de transmission variable, comme illustré à la figure 3.

Dans cet exemple de mise en oeuvre, chaque groupe de pixels comporte au maximum un seul pixel d'image PI(2k, 2l) qui est attribué à un quatrième pixel d'affichage PA(2k, 2l) d'un quadruplet Q(k, l). Par conséquent, le canal de transmission variable correspond à celui qui n'est pas utilisé pour transmettre les deux autres pixels d'image PI du même groupe de pixels.

Naturellement, l'invention n'est pas limitée aux modes de mise en oeuvre décrits en référence aux figures et des variantes pourraient être envisagées sans sortir du cadre de l'invention.

## Revendications

1. Procédé de transmission (100) d'une image numérique monochrome provenant d'une source d'images numériques reliée à un écran monochrome au moyen d'une interface de transmission comportant une pluralité de canaux de transmission (CT1, CT2, CT3), l'image monochrome comportant une pluralité de pixels d'image (PI), l'écran monochrome comportant une pluralité de pixels d'affichage (PA), le procédé (100) comportant les étapes suivantes :

   - (110) répartir les pixels d'image (PI) en une pluralité de groupes de pixels ($G_{Nb}$, $G1_{Nb'}$, $G2_{Nb'}$, $G3_{Nb'}$, $G4_{Nb'}$), chaque groupe de pixels ($G_{Nb}$, $G1_{Nb'}$, $G2_{Nb'}$, $G3_{Nb'}$, $G4_{Nb'}$) comprenant un nombre de pixels d'image (PI) égal au nombre de canaux de transmission (CT1, CT2, CT3) ;
   - (120) transmettre successivement les groupes de pixels depuis la source d'images numériques vers l'écran monochrome via l'interface de transmission, les pixels d'image (PI) de chaque groupe de pixels étant transmis en parallèle via les canaux de transmission (CT1, CT2, CT3) ;
   - (130) attribuer chaque pixel d'image (PI) reçu par l'écran monochrome à un pixel d'affichage (PA) correspondant de manière à reconstituer l'image numérique sur l'écran monochrome.

2. Procédé de transmission (100) selon la revendication 1, dans lequel l'interface de transmission comporte trois canaux de transmission (CT1, CT2, CT3), chaque groupe de pixels ($G_{Nb}$, $G1_{Nb'}$, $G2_{Nb'}$, $G3_{Nb'}$, $G4_{Nb'}$) comportant trois pixels d'image (PI).

3. Procédé de transmission (100) selon l'une quelconque des revendications 1 et 2, dans lequel les pixels d'affichage (PA) de l'écran monochrome forment une matrice d'affichage, les pixels d'affichage (PA) étant agencés de manière à former des ensembles de trois pixels appelés « triplets » (T), chaque triplet (T) étant une sous-matrice de dimensions (1,3) de la matrice d'affichage, les triplets (T) formant une matrice secondaire de dimensions (M,N), les pixels d'image (PI) étant répartis de manière à ce que chaque groupe de pixels ($G_{Nb}$) soit attribué directement à un triplet (T) correspondant.

4. Procédé de transmission (100) selon la revendication 3, dans lequel chaque groupe de pixels ($G_{Nb}$) est identifié par un numéro d'identification Nb défini par l'équation suivante :

$$Nb = N.(i-1) + j$$

   où i et j sont des nombres entiers variant respectivement de 1 à M et de 1 à N, les groupes de pixels ($G_{Nb}$) étant transmis par ordre croissant des numéros d'identification.

5. Procédé de transmission (100) selon l'une quelconque des revendications 3 et 4, dans lequel les pixels d'affichage (PA) ayant une position identique dans chaque triplet (T) sont associés à un même canal de transmission (CT1, CT2, CT3).

6. Procédé de transmission (100) selon l'une quelconque des revendications 1 et 2, dans lequel les pixels d'affichage (PA) de l'écran monochrome forment une matrice d'affichage, les pixels d'affichage (PA) étant agencés de manière à former des ensembles de quatre pixels appelés « quadruplets » (Q), chaque quadruplet (Q) étant une sous-matrice carrée de dimension 2 de la matrice d'affichage, les quadruplets (Q) formant une matrice secondaire de dimensions (M',N'), les pixels d'image (PI) étant répartis de manière à former des motifs de répétition (MR) comprenant chacun quatre groupes de pixels ($G1_{Nb'}$, $G2_{Nb'}$, $G3_{Nb'}$, $G4_{Nb'}$), les pixels d'image (PI) de chaque motif de répétition (MR) étant attribués aux pixels d'affichage (PA) de trois quadruplets (Q) consécutifs appartenant à la même ligne de la matrice secondaire.

7. Procédé de transmission (100) selon la revendication 6, dans lequel chaque motif de répétition (MR) est identifié par un numéro d'identification Nb' défini par l'équation suivante :

$$Nb' = N'.(k-1) + l'$$

où k et l' sont des nombres entiers variant respectivement de 1 à M' et de 1 à N'/3, le motif de répétition MR(k, l') comportant un premier groupe de pixels $G1_{Nb'}$, un deuxième groupe de pixels $G2_{Nb'}$, un troisième groupe de pixels $G3_{Nb'}$ et un quatrième groupe de pixels $G4_{Nb'}$ tels que :

$$G1_{Nb'} \ni \{PI(2k-1, 2l-1); PI(2k-1, 2l); PI(2k, 2l-1)\};$$

$$G2_{Nb'} \ni \{PI(2k, 2l); PI(2k-1, 2(l+1)-1); PI(2k, 2(l+1)-1)\};$$

$$G3_{Nb'} \ni \{PI(2k-1, 2(l+1)); PI(2k, 2(l+1)); PI(2k-1, 2(l+2)-1)\};$$

$$G4_{Nb'} \ni \{PI(2k, 2(l+2)-1); PI(2k-1, 2(l+2)); PI(2k, 2(l+2))\};$$

où l = 3l' - 2.

8. Procédé de transmission (100) selon la revendication 7, dans lequel les motifs de répétition (MR) sont transmis par ordre croissant des numéros d'identification.

9. Procédé de transmission (100) selon l'une quelconque des revendications 6 à 8, dans lequel trois des quatre pixels d'affichage (PA) de chaque quadruplet (Q) sont chacun associés à un canal de transmission (CT1, CT2, CT3), les pixels d'affichage (PA) associés au même canal de transmission (CT1, CT2, CT3) ayant une position identique dans chaque quadruplet (Q).

**Patentansprüche**

1. Verfahren zur Übertragung (100) eines monochromen digitalen Bildes von einer Quelle digitaler Bilder, die mit einem monochromen Bildschirm verbunden ist, mittels einer Übertragungsschnittstelle, die eine Vielzahl von Übertragungskanälen (CT1, CT2, CT3) aufweist, wobei das monochrome Bild eine Vielzahl von Bildpixeln (PI) aufweist, der monochrome Bildschirm eine Vielzahl von Anzeigepixeln (PA) aufweist, das Verfahren (100) die folgenden Schritte aufweist:

- (110) Aufteilen der Bildpixel (PI) in eine Vielzahl von Pixelgruppen ($G_{Nb}$, $G1_{Nb'}$, $G2_{Nb'}$, $G3_{Nb'}$, $G4_{Nb'}$), wobei jede Pixelgruppe ($G_{Nb}$, $G1_{Nb'}$, $G2_{Nb'}$, $G3_{Nb'}$, $G4_{Nb'}$) eine Anzahl von Bildpixeln (PI) umfasst, die gleich der Anzahl der Übertragungskanäle (CT1, CT2, CT3) ist;
- (120) sukzessives Übertragen der Pixelgruppen mittels der Übertragungsschnittstelle von der Quelle der digitalen Bilder an den monochromen Bildschirm, wobei die Bildpixel (PI) jeder Pixelgruppe parallel mittels der Übertragungskanäle (CT1, CT2, CT3) übertragen werden;
- (130) Zuordnen jedes von dem monochromen Bildschirm empfangenen Bildpixels (PI) zu einem entsprechenden Anzeigepixel (PA), um das digitale Bild auf dem monochromen Bildschirm zu rekonstruieren.

2. Verfahren zur Übertragung (100) nach Anspruch 1, wobei die Übertragungsschnittstelle drei Übertragungskanäle (CT1, CT2, CT3) aufweist, wobei jede Gruppe von Pixeln ($G_{Nb}$, $G1_{Nb'}$, $G2_{Nb'}$, $G3_{Nb'}$, $G4_{Nb'}$) drei Bildpixel (PI) aufweist.

3. Verfahren zur Übertragung (100) nach einem der Ansprüche 1 oder 2, wobei die Anzeigepixel (PA) des monochromen Bildschirms eine Anzeigematrix bilden, die Anzeigepixel (PA) so angeordnet sind, dass sie Sätze von drei Pixeln bilden, die als "Tripel" (T) bezeichnet werden, jedes Tripel (T) eine Untermatrix mit den Dimensionen (1,3) der Anzeigematrix ist, die Tripel (T) eine Sekundärmatrix mit den Dimensionen (M,N) bilden, die Bildpixel (PI) so verteilt sind, dass jede Gruppe von Pixeln ($G_{Nb}$) direkt einem entsprechenden Tripel (T) zugeordnet ist.

4. Verfahren zur Übertragung (100) nach Anspruch 3, wobei jede Gruppe von Pixeln ($G_{Nb}$) durch eine Identifikationsnummer Nb identifiziert wird, die durch die folgende Gleichung definiert ist:

$$Nb = N.(i-1) + j$$

worin i und j ganze Zahlen sind, die jeweils von 1 bis M und von 1 bis N variieren, wobei die Gruppen von Pixeln ($G_{Nb}$) in aufsteigender Reihenfolge der Identifikationsnummern übertragen werden.

5. Verfahren zur Übertragung (100) nach einem der Ansprüche 3 oder 4, wobei die Anzeigepixel (PA), die in jedem Tripel (T) eine identische Position haben, demselben Übertragungskanal (CT1, CT2, CT3) zugeordnet sind.

6. Verfahren zur Übertragung (100) nach einem der Ansprüche 1 oder 2, wobei die Anzeigepixel (PA) des monochromen Bildschirms eine Anzeigematrix bilden, die Anzeigepixel (PA) so angeordnet sind, dass sie Sätze von vier Pixeln bilden, die als "Quadrupel" (Q) bezeichnet werden, jedes Quadrupel (Q) eine quadratische Untermatrix der Dimension 2 der Anzeigematrix ist, die Quadrupel (Q) eine Sekundärmatrix mit den Dimensionen (M', N') bilden, die Bildpixel (PI) so verteilt sind, dass sie Wiederholungsmuster (MR) bilden, die jeweils vier Pixelgruppen ($G1_{Nb'}$, $G2_{Nb'}$, $G3_{Nb'}$, $G4_{Nb'}$) umfassen, die Bildpixel (PI) jedes Wiederholungsmusters (MR) den Anzeigepixeln (PA) von drei aufeinanderfolgenden Quadrupeln (Q) zugeordnet sind, die zur selben Zeile der Sekundärmatrix gehören.

7. Verfahren zur Übertragung (100) nach Anspruch 6, wobei jedes Wiederholungsmuster (MR) durch eine Identifikationsnummer Nb' identifiziert wird, die durch die folgende Gleichung definiert ist:

$$Nb' = N'.(k-1) + l'$$

worin k und l' ganze Zahlen sind, die jeweils von 1 bis M' und von 1 bis N'/3 variieren, das Wiederholungsmuster MR(k,l') eine erste Gruppe von Pixeln $G1_{Nb'}$, eine zweite Gruppe von Pixeln $G2_{Nb'}$, eine dritte Gruppe von Pixeln $G3_{Nb'}$ und eine vierte Gruppe von Pixeln $G4_{Nb'}$ aufweist, so dass:

$$G1_{Nb'} \ni \{PI(2k-1, 2l-1); PI(2k-1, 2l); PI(2k, 2l-1)\};$$

$$G2_{Nb'} \ni \{PI(2k, 2l); PI(2k-1, 2(l+1)-1); PI(2k, 2(l+1)-1)\};$$

$$G3_{Nb'} \ni \{PI(2k-1, 2(l+1)); PI(2k, 2(l+1)); PI(2k-1, 2(l+2)-1)\};$$

$$G4_{Nb'} \ni \{PI(2k, 2(l+2)-1); PI(2k-1, 2(l+2)); PI(2k, 2(l+2))\};$$

worin
l = 3l' - 2.

8. Verfahren zur Übertragung (100) nach Anspruch 7, wobei die Wiederholungsmuster (MR) in aufsteigender Reihenfolge der Identifikationsnummern übertragen werden.

9. Verfahren zur Übertragung (100) nach einem der Ansprüche 6 bis 8, wobei drei der vier Anzeigepixel (PA) jedes Quadrupels (Q) jeweils einem Übertragungskanal (CT1, CT2, CT3) zugeordnet sind, wobei die Anzeigepixel (PA), die demselben Übertragungskanal (CT1, CT2, CT3) zugeordnet sind, in jedem Quadrupel (Q) eine identische Position haben.

**Claims**

1. Method for transmitting (100) a monochrome digital image from a digital image source connected to a monochrome screen by means of a transmission interface including a plurality of transmission channels (CT1, CT2, CT3), the monochrome image including a plurality of image pixels (PI), the monochrome screen including a plurality of display pixels (PA), the method (100) including the following steps:

- (110) dividing the image pixels (PI) into a plurality of pixel groups ($G_{Nb}$, $G1_{Nb'}$, $G2_{Nb'}$, $G3_{Nb'}$, $G4_{Nb'}$), each pixel group ($G_{Nb}$, $G1_{Nb'}$, $G2_{Nb'}$, $G3_{Nb'}$, $G4_{Nb'}$) comprising a number of image pixels (PI) equal to the number of transmission channels (CT1, CT2, CT3);

- (120) successively transmitting the pixel groups from the digital image source to the monochrome screen via the transmission interface, the image pixels (PI) of each group of pixels being transmitted in parallel via the transmission channels (CT1, CT2, CT3);

- (130) assigning each image pixel (PI) received by the monochrome screen to a corresponding display pixel (PA) in such a way as to reconstruct the digital image on the monochrome screen.

2. Method for transmitting (100) according to claim 1, wherein the transmission interface includes three transmission channels (CT1, CT2, CT3), each group of pixels ($G_{Nb}$, $G1_{Nb'}$, $G2_{Nb'}$, $G3_{Nb'}$, $G4_{Nb'}$) including three image pixels (PI).

3. Method for transmitting (100) according to any of claims 1 and 2, wherein the display pixels (PA) of the monochrome screen form a display matrix, the display pixels (PA) being arranged in such a way as to form sets of three pixels called "triplets" (T), each triplet (T) being a sub-matrix of dimensions (1,3) of the display matrix, the triplets (T) forming a secondary matrix of dimensions (M,N), the image pixels (PI) being divided in such a way that each group of pixels ($G_{Nb}$) is directly assigned to a corresponding triplet (T).

4. Method for transmitting (100) according to claim 3, wherein each group of pixels ($G_{Nb}$) is identified by an identification number Nb defined by the following equation:

$$Nb = N.(i - 1) + j$$

where i and j are integers varying respectively from 1 to M and from 1 to N, the pixel groups ($G_{Nb}$) being transmitted in increasing order of identification numbers.

5. Method for transmitting (100) according to any of claims 3 and 4, wherein the display pixels (PA) having an identical position in each triplet (T) are associated with the same transmission channel (CT1, CT2, CT3).

6. Method for transmitting (100) according to any of claims 1 and 2, wherein the display pixels (PA) of the monochrome screen form a display matrix, the display pixels (PA) being arranged in such a way as to form sets of four pixels called "quadruplets" (Q), each quadruplet (Q) being a square sub-matrix of dimension 2 of the display matrix, the quadruplets (Q) forming a secondary matrix of dimensions (M',N'), the image pixels (PI) being divided in such a way as to form repetitive patterns (MR) with each one comprising four pixel groups ($G1_{Nb'}$, $G2_{Nb'}$, $G3_{Nb'}$, $G4_{Nb'}$), the image pixels (PI) of each repetitive pattern (MR) being assigned to the display pixels (PA) of three consecutive quadruplets (Q) belonging to the same line of the secondary matrix.

7. Method for transmitting (100) according to claim 6, wherein each repetitive pattern (MR) is identified by an identification number Nb' defined by the following equation:

$$Nb' = N'.(k - 1) + l'$$

where k and l' are integers varying respectively from 1 to M' and from 1 to N'/3, the repetitive pattern MR(k,l') including a first group of pixels $G1_{Nb'}$, a second group of pixels $G2_{Nb'}$, a third group of pixels $G3_{Nb'}$ and a fourth group of pixels $G4_{Nb'}$ such that:

$$G1_{Nb'} \ni \{PI(2k - 1, 2l - 1); PI(2k - 1, 2l); PI(2k, 2l - 1)\};$$

$$G2_{Nb'} \ni \{PI(2k, 2l); PI(2k - 1, 2(l + 1) - 1); PI(2k, 2(l + 1) - 1)\};$$

$$G3_{Nb'} \ni \{PI(2k - 1, 2(l + 1)); PI(2k, 2(l + 1)); PI(2k - 1, 2(l + 2) - 1)\};$$

$$G4_{Nb'} \ni \{PI(2k, 2(l + 2) - 1); PI(2k - 1, 2(l + 2)); PI(2k, 2(l + 2))\};$$

where 1 = 31' - 2.

8. Method for transmitting (100) according to claim 7, wherein the repetitive patterns (MR) are transmitted in increasing order of identification numbers.

9. Method for transmitting (100) according to any of claims 6 to 8, wherein three of the four display pixels (PA) of each quadruplet (Q) are each associated with a transmission channel (CT1, CT2, CT3), the display pixels (PA) associated with the same transmission channel (CT1, CT2, CT3) having an identical position in each quadruplet (Q).

100

| 110 |
| 120 |
| 130 |

**Fig. 1**

j

| PA/PI (i,3j-2) CT1 | PA/PI (i,3j-1) CT2 | PA/PI (i,3j) CT3 |

j+1

| PA/PI (i,3(j+1)-2) CT1 | PA/PI (i,3(j+1)-1) CT2 | PA/PI (i,3(j+1)) CT3 |

i

$T(i,j)$    $G_{Nb}$    $T(i,j+1)$    $G_{Nb+1}$

**Fig. 2**

$MR(k,l')$

$Q(k,l)$    $Q(k,l+1)$    $Q(k,l+2)$

l    l+1    l+2

| PA/PI (2k-1,2l-1) CT1 | PA/PI (2k-1,2l) CT2 | PA/PI (2k-1,2(l+1)-1) CT1 | PA/PI (2k-1,2(l+1)) CT2 | PA/PI (2k-1,2(l+2)-1) CT1 | PA/PI (2k-1,2(l+2)) CT2 |
| PA/PI (2k,2l-1) CT3 | PA/PI (2k,2l) CT2 | PA/PI (2k-2(l+1)-1) CT3 | PA/PI (2k,2(l+1)) CT3 | PA/PI (2k,2(l+2)-1) CT3 | PA/PI (2k,2(l+2)) CT1 |

k

$G1_{Nb}'$    $G2_{Nb}'$    $G3_{Nb}'$    $G4_{Nb}'$

**Fig. 3**

**EP 3 776 522 B1**

## RÉFÉRENCES CITÉES DANS LA DESCRIPTION

**Documents brevets cités dans la description**

- US 2003071775 A